# EUROPÄISCHE PATENTSCHRIFT

(11) **EP 1 856 489 B1**
(45) Veröffentlichungstag und Bekanntmachung des Hinweises auf die Patenterteilung: **09.01.2013**
(21) Anmeldenummer: 06722464.2
(22) Anmeldetag: 01.02.2006
(51) Int. Cl.: G01G 15/00, G01G 21/28, G01G 19/03

(54) **KONTROLLWAAGE**
CHECK WEIGHER
BALANCE DE VERIFICATION

(30) Priorität: 09.02.2005 DE 102005006002
(43) Veröffentlichungstag der Anmeldung: 21.11.2007
(73) Patentinhaber: Sartorius Mechatronics C&D GmbH & Co. KG, 52070 Aachen (DE)
(72) Erfinder: SCHOLPP, Werner, 71739 Oberriexingen (DE)
(74) Vertreter: Naeven, Ralf
(86) Internationale Anmeldenummer: PCT/DE2006/000145
(87) Internationale Veröffentlichungsnummer: WO 2006/084431

(56) Entgegenhaltungen:
- EP-A- 1 416 256
- WO-A-2004/102135
- US-A- 4 582 151

## Beschreibung

Die Erfindung betrifft eine Kontrollwaage mit einem Maschinenkörper.

Es sind Kontrollwaagen bekannt, die aus einem im Wesentlichen L-förmigen Maschinenkörper sowie Wäge- und Transporttischen bestehen, welche durch Klemm- oder Schraubbefestigung am vertikalen Teil des Maschinenkörpers in unterschiedlicher Höhe montiert werden. Da die Genauigkeit dieser Waagen sehr stark von der Steifigkeit und Spielfreiheit beeinflusst wird, ist eine derartige Verbindungstechnik mit Nachteilen behaftet. Außerdem entstehen durch diese Konstruktion unzugängliche Spalte, die schlecht gereinigt werden können, was insbesondere bei Kontrollwaagen von Nachteil ist, die im Nahrungsmittelbereich oder in der Pharmaindustrie eingesetzt werden sollen.

US-A-4 582 151 betrifft eine in einer Schublade angeordnete Waage, wie sie z.B. in Küchen oder Labors verwendet werden können. WO 2004/102135 A1 offenbart eine Vorrichtung zum Wiegen von Produkten. Die Wägezelle ist frontseitig an einem Maschinenkörper befestigt, wobei die Befestigungsart nicht dargestellt ist. EP-A-1 416 256 zeigt eine Kontrollwaage mit Wägezelle und Maschinenkörper. Demnach werden Laufbänder und Waage über einen Rahmen (10) mittels quertaufenden Armen (31) und einem senkrecht dazu verlaufenden Steg (32) gehalten.

Der vorliegenden Erfindung liegt die Aufgabe zugrunde, eine Kontrollwaage zu schaffen, deren Wäge- und Transporttische mit verbesserter Verbindungstechnik exakt am Maschinenkörper befestigt werden können, sodass die vorgenannten Nachteile vermieden werden. Darüber hinaus soll auch die Möglichkeit gegeben sein, weitere Bauteile flexibel am Maschinenkörper fixieren zu können.

Diese Aufgabe wird mit der Merkmalskombination des unabhängigen Vorrichtungsanspruchs 1 gelöst. Vorteilhafte Weiterbildungen der Erfindung sind Gegenstand der abhängigen Ansprüche 2 bis 10.

Anhand von Zeichnungen wird die Erfindung im Folgenden näher erläutert. Es zeigen:
Fig. 1: Eine perspektivische Ansicht der erfindungsgemäßen Kontrollwaage schräg von vorne.
Fig. 2: Eine perspektivische Ansicht eines Details der Kontrollwaage, welches den Befestigungsflansch, die Montageplatte, die Halteplatte und das Klemmelement gemäß der Erfindung zeigt.
Fig. 3: Eine perspektivische Ansicht eines Details der Kontrollwaage, welches den Befestigungsflansch, die Montageplatte, die Halteplatte und das wegbewegte Klemmelement gemäß der Erfindung zeigt.
Fig. 4: Eine perspektivische Ansicht eines Details der Kontrollwaage, welches die horizontale Aufspannplatte, den Befestigungsflansch, ein Stützelement, die Halteplatte und das Klemmelement gemäß der Erfindung zeigt.
Fig. 5: Details der Kontrollwaage, welche verschiedene Ausführungen der Kontur des Befestigungsflansches zeigen.

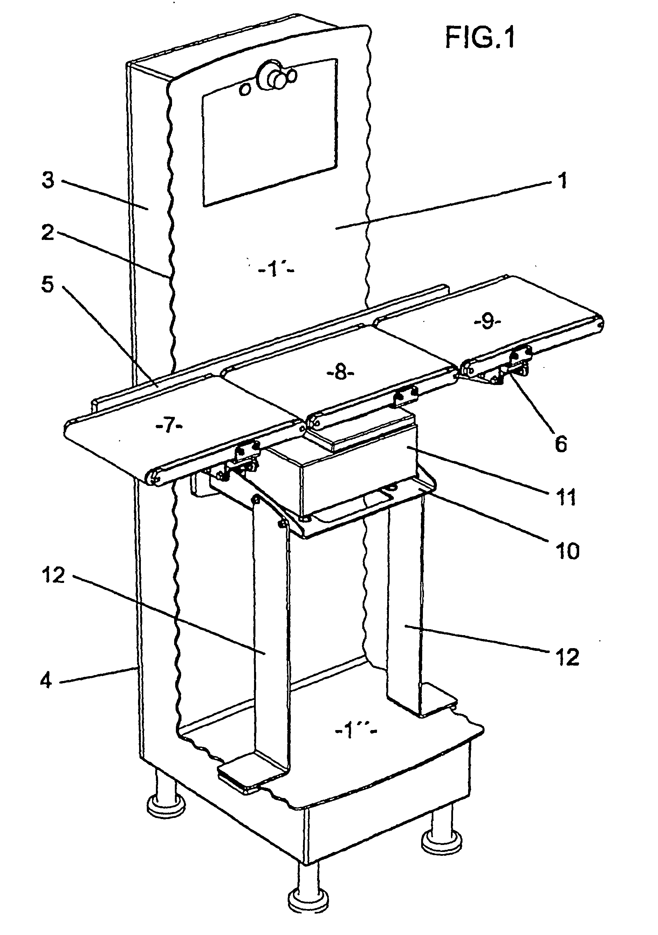

Die Kontrollwaage wird in Fig. 1 beispielhaft gezeigt. Sie besteht aus einer Aufspannplatte 1 mit Befestigungsflansch 2, die vorzugsweise einen vertikalen Schenkel 1' sowie einen horizontalen Schenkel 1" besitzt, sowie einem mit der Aufspannplatte 1 lösbar oder unlösbar verbundenem Blechhohlkörper 3 mit rückwärtiger Türe 4. Eine Montageplatte 5 ist mit hier nicht gezeigten Befestigungselementen am vertikalen Schenkel 1' der Aufspannplatte 1 befestigt und trägt zwei Transportbandkonsolen 6, auf welchen die Transportbänder 7 und 9 montiert sind, sowie eine Wägezellen-Konsole 10. Letztere trägt die Wägezelle 11 mit Transportband 8 und kann optional mittels Stützstreben 12 mit dem horizontalen Schenkel 1" der Aufspannplatte verbunden werden.

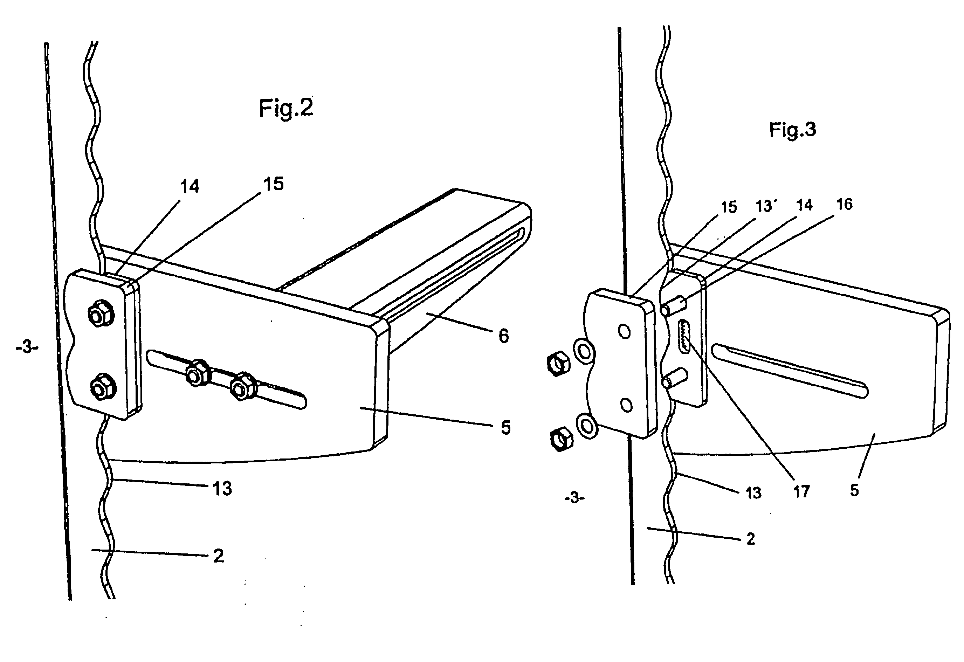

Fig. 2 zeigt ein Detail, welches die Befestigung der Montageplatte 5 am Befestigungsflansch 2 sowie dessen Kontur 13 sichtbar macht. Dazu dient eine Halteplatte 14, die vorzugsweise unlösbar mit der Montageplatte 5 verbunden ist und deren hier nicht sichtbare Kontur 13' deckungsgleich mit der Kontur 13 des Befestigungsflansches 2 ist. Sie nimmt die vertikalen Kräfte spielfrei auf. Ein Klemmelement 15 dient zusammen mit Schrauben und Muttern zur lösbaren Verbindung, die in jeder Position des vorgegebenen Rasters der Kontur 13 erfolgen kann.

Fig. 3 zeigt dieselben Teile wie Fig. 2, jedoch ist zur besseren Sichtbarkeit das Klemmelement 15 samt Muttern und Scheiben in Richtung der Schraubenachsen wegbewegt. Die Schrauben 16 sind mit der Montageplatte 5 optimal verschweißt und durchdringen die Halteplatte 14, welche ebenfalls eine Schweißverbindung 17 mit der Montageplatte 5 besitzt.

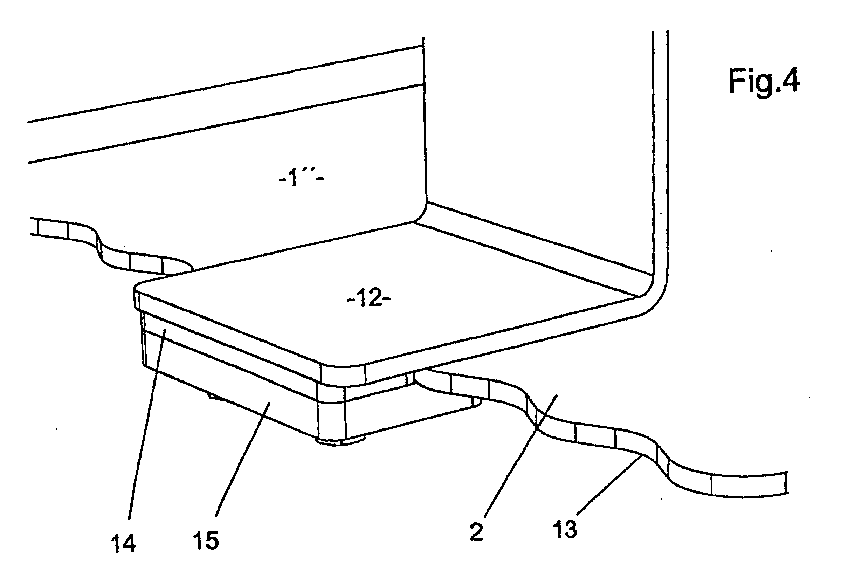

Fig. 4 zeigt im Detail die Verbindung des Stützelements 12 mit dem Befestigungsflansch 2 am horizontalen Schenkel 1" der Aufspannplatte 1. Auch hier erfolgt die Verbindung mittels Halteplatte 14 und Klemmelement 15, wobei die Kontur 13 eine genaue Positionierung ermöglicht.

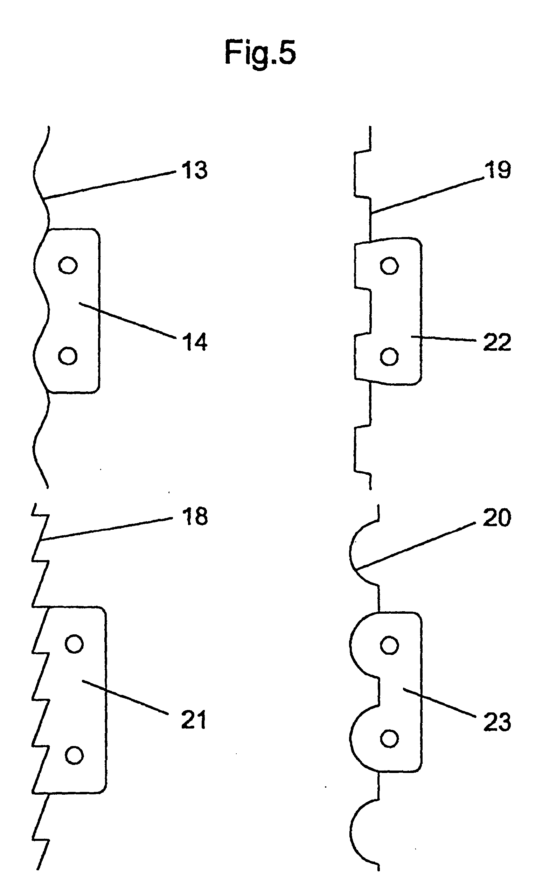

Fig. 5 zeigt vier unterschiedliche Konturen von Befestigungsflansch und Halteplatten, die der form- und/oder kraftschlüssigen Verbindung in vertikaler Richtung dienen: Kontur 13 mit Halteplatte 14 besteht aus ineinander übergehenden Kreisbögen und Geraden bzw. hat einen sinusförmigen Verlauf, Kontur 18 mit Halteplatte 21 besteht aus sägezahnförmigen Geraden, Kontur 19 mit Halteplatte 22 zeigt eine trapezförmige Linie, während Kontur 20 mit Halteplatte 23 aus eckig verbundenen Kreisbögen und Geraden gebildet wird.

### Bezugszeichenliste

- 1: Aufspannplatte
- 1', 1": Vertikaler und horizontaler Schenkel der Aufspannplatte
- 2: Befestigungsflansch
- 3: Blechhohlkörper
- 4: Türe
- 5: Montageplatte
- 6: Transportbandkonsolen
- 7, 8, 9: Transportbänder
- 10: Wägezellenkonsole
- 11: Wägezelle
- 12: Stützstreben
- 13, 18, 19, 20: Konturen des Befestigungsflansches
- 14, 21, 22, 23: Halteplatten
- 13', 18', 19', 20': Konturen der Halteplatten
- 15: Klemmelement
- 16: Schrauben
- 17: Schweißverbindung

## Patentansprüche

1. Kontrollwaage mit einem Maschinenkörper und einer am Maschinenkörper befestigten Wägezelle (11),
**dadurch gekennzeichnet, dass**
der Maschinenkörper aus einem rückseitigen Hohlkörper (3) und einer frontseitigen Aufspannplatte (1) besteht, welche den Hohlkörper (3) zumindest an zwei einander gegenüberliegenden Seiten zumindest stellenweise überragt und so einen Befestigungsflansch (2) bildet, wobei die Wägezelle (11) auf der dem Hohlkörper (3) abgewandten Vorderseite der Aufspannplatte (1) lösbar am Befestigungsflansch (2) festgelegt ist.

2. Kontrollwaage nach Anspruch 1, **dadurch gekennzeichnet, dass** der Hohlkörper (3) mit der Aufspannplatte (1) unlösbar verbunden ist.

3. Kontrollwaage nach Anspruch 1 oder 2, **dadurch gekennzeichnet, dass** eine Montageplatte (5) mittels Klemmelementen (15) lösbar am Befestigungsflansch (2) befestigt ist, wobei die Montageplatte (5) und die Klemmelemente (15) den Befestigungsflansch (2) an zwei gegenüber liegenden Seiten des Befestigungsflansches (2) an Befestigungsstellen zwischen sich einklemmen.

4. Kontrollwaage nach einem der vorhergehenden Ansprüche, **dadurch gekennzeichnet, dass** der Befestigungsflansch (2) an seinem Umfang eine im beliebigen Rastermaß vor- und zurückspringende Kontur (13, 18, 19 oder 20) besitzt.

5. Kontrollwaage nach Anspruch 3 oder 4, **dadurch gekennzeichnet, dass** für jede Befestigungsstelle ein an der Montageplatte (5) fixiertes Halteelement (14, 21, 22 oder 23) vorgesehen ist, welches bei befestigter Montageplatte (5) am Umfang des Befestigungsflansches (2) anliegt.

6. Kontrollwaage nach Anspruch 5, **dadurch gekennzeichnet, dass** die Halteelemente (14, 21, 22 oder 23) eine Kontur (13', 18', 19' oder 20') besitzen, welche mit der Kontur (13, 18, 19 oder 20) des Befestigungsflansches (2) zusammenwirkt.

7. Kontrollwaage nach einem der Ansprüche 3 bis 6, **dadurch gekennzeichnet, dass** die Montageplatte (5) Durchbrüche besitzt, an welchen Transportbandkonsolen (6) lösbar und einstellbar befestigt sind.

8. Kontrollwaage nach einem der Ansprüche 3 bis 7, **dadurch gekennzeichnet, dass** an der Montageplatte (5) eine Wägezellenkonsole (10) lösbar befestigt wird, welche eine Wägezelle (11) trägt.

9. Kontrollwaage nach einem der vorhergehenden Ansprüche, **dadurch gekennzeichnet, dass** die Aufspannplatte (1) einen vertikalen Schenkel (1') sowie einen horizontalen Schenkel (1 ") besitzt.

10. Kontrollwaage nach Anspruch 9, **dadurch gekennzeichnet, dass** Stützstreben (12) mittels Klemmelementen (15) am Befestigungsflansch (2) des horizontalen Schenkels (1") und der Wägezellenkonsole (10) befestigt sind.

## Claims

1. A check weigher with a machine body and with a weighing cell (11) fastened to the machine body, **characterized in that** the machine body consists of a rear-side hollow body (3) and of a front-side mounting plate (1) which projects, at least in places, beyond the hollow body (3), at least on two sides lying opposite one another, and thus forms a fastening flange (2), the weighing cell (11) being secured releasably to the fastening flange (2) on the front side of the mounting plate (1), said front side facing away from the hollow body (3).

2. The check weigher as claimed in claim 1, **characterized in that** the hollow body (3) is connected unreleasably to the mounting plate (1).

3. The check weigher as claimed in claim 1 or 2, **characterized in that** an assembly plate (5) is fastened releasably to the fastening flange (2) by means of clamping elements (15), the assembly plate (5) and the clamping elements (15) clamping between them the fastening flange (2) at fastening points on two sides of the fastening flange (2) which lie opposite one another.

4. The check weigher as claimed in one of the preceding claims, **characterized in that** the fastening flange (2) possesses on its circumference a contour (13, 18, 19 or 20) projecting and set back in any desired modular dimension.

5. The check weigher as claimed in claim 3 or 4, **characterized in that**, for each fastening point, a holding element (14, 21, 22 or 23) fixed to the assembly plate (5) is provided, which, with the assembly plate (5) fastened, butts against the circumference of the fastening flange (2).

6. The check weigher as claimed in claim 5, **characterized in that** the holding elements (14, 21, 22 or 23) possess a contour (13', 18', 19' or 20') which cooperates with the contour (13, 18, 19 or 20) of the fastening flange (2).

7. The check weigher as claimed in one of claims 3 to 6, **characterized in that** the assembly plate (5) possesses perforations at which conveyor belt brackets (6) are fastened releasably and adjustably.

8. The check weigher as claimed in one of claims 3 to 7, **characterized in that** a weighing cell bracket (10) which carries a weighing cell (11) is fastened releasably to the assembly plate (5).

9. The check weigher as claimed in one of the preceding claims, **characterized in that** the mounting plate (1) possesses a vertical leg (1') and a horizontal leg (1'').

10. The check weigher as claimed in claim 9, **characterized in that** supporting struts (12) are fastened to the fastening flange (2) of the horizontal leg (1'') and of the weighing cell bracket (10) by means of clamping elements (15).

## Revendications

1. Balance de contrôle comprenant un corps de machine et une cellule de pesée (11) fixée sur le corps de machine,
**caractérisée en ce que**
le corps de machine se compose d'un corps creux (3) du côté arrière et d'un plateau de fixation (1) du côté avant, lequel dépasse au moins en partie du corps creux (3) au moins au niveau de deux côtés opposés et forme ainsi une collerette de fixation (2), la cellule de pesée (11) étant fixée de manière amovible sur la collerette de fixation (2) sur le côté avant du plateau de fixation (1) opposé au corps creux (3).

2. Balance de contrôle selon la revendication 1, **caractérisée en ce que** le corps creux (3) est connecté de manière inamovible au plateau de fixation (1).

3. Balance de contrôle selon la revendication 1 ou 2, **caractérisée en ce qu'**un plateau de montage (5) est fixé de manière amovible à la collerette de fixation (2) au moyen d'éléments de serrage (15), le plateau de montage (5) et les éléments de serrage (15) serrant entre eux la collerette de fixation (2) au niveau de deux côtés opposés de la collerette de fixation (2) en des points de fixation.

4. Balance de contrôle selon l'une quelconque des revendications précédentes, **caractérisée en ce que** la collerette de fixation (2) possède sur sa circonférence un contour (13, 18, 19 ou 20) saillant suivant un pas quelconque vers l'avant et vers l'arrière.

5. Balance de contrôle selon la revendication 3 ou 4, **caractérisée en ce que** pour chaque point de fixation, il est prévu un élément de retenue (14, 21, 22 ou 23) fixé sur le plateau de montage (5), lequel s'applique sur la circonférence de la collerette de fixation (2) lorsque le plateau de montage (5) est fixé.

6. Balance de contrôle selon la revendication 5, **caractérisée en ce que** les éléments de retenue (14, 21, 22 ou 23) possèdent un contour (13', 18', 19' ou 20') qui coopère avec le contour (13, 18, 19 ou 20) de la collerette de fixation (2).

7. Balance de contrôle selon l'une quelconque des revendications 3 à 6, **caractérisée en ce que** le plateau de montage (5) possède des ouvertures au niveau desquelles sont fixées des consoles de bande de transport (6), de manière amovible et ajustable.

8. Balance de contrôle selon l'une quelconque des revendications 3 à 7, **caractérisée en ce qu'**une console de cellule de pesée (10) est fixée de manière amovible sur le plateau de montage (5), et porte une cellule de pesée (11).

9. Balance de contrôle selon l'une quelconque des revendications précédentes, **caractérisée en ce que** le plateau de fixation (1) possède une branche verticale (1') ainsi qu'une branche horizontale (11").

10. Balance de contrôle selon la revendication 9, **caractérisée en ce que** des montants de support (12) sont fixés au moyen d'éléments de serrage (15) sur la collerette de fixation (2) de la branche horizontale (1") et de la console de cellule de pesée (10).
